# EUROPÄISCHE PATENTSCHRIFT

(11) **EP 0 602 260 B1**
(45) Veröffentlichungstag und Bekanntmachung des Hinweises auf die Patenterteilung: **25.09.1996**
(21) Anmeldenummer: 92121261.9
(22) Anmeldetag: 14.12.1992
(51) Int. Cl.: G01M 15/00, F02B 77/08

(54) **Verfahren zur Überprüfung der Meldung von Verbrennungsaussetzern einer Brennkraftmaschine durch verschiedene Teilverfahren**
Process for testing misfiring reports in an internal combustion engine, through partial testing processes
Procédé pour éprouver des défauts d'allumage dans un moteur à combustion interne, à l'aide d'épreuves partielles

(43) Veröffentlichungstag der Anmeldung: 22.06.1994
(73) Patentinhaber: SIEMENS AKTIENGESELLSCHAFT, 80333 München (DE)
(72) Erfinder: Angermaier, Anton, Dipl.-Ing. (FH), W-8300 Landshut (DE); Wier, Manfred, Dr.-Ing., W-8411 Wenzenbach (DE)

(56) Entgegenhaltungen:
- WO-A-92/11522
- DE-A- 4 117 656
- US-A- 5 088 318
- PATENT ABSTRACTS OF JAPAN vol. 13, no. 517 (P-962) 20. November 1989 ; & JP-A-12 10 840

## Beschreibung

Die Erfindung betrifft ein Verfahren zur Überprüfung der Meldung von Verbrennungsaussetzern einer Brennkraftmaschine bei der Kombination mehrerer Teilverfahren durch eine gewichtete Kombination dieser Teilverfahren, um so die Zuverlässigkeit der Aussetzererkennung zu erhöhen.

Verbrennungsaussetzer beim Betrieb einer Brennkraftmaschine müssen erkannt werden, um damit verbundenen erhöhten Schadstoffausstößen begegnen zu können und um den Katalysator vor Überhitzung zu schützen.

Zur Erkennung von Verbrennungsaussetzern sind schon eine Vielzahl von Verfahren bekannt.
Die Verfahren weisen eine unterschiedliche Zuverlässigkeit auf, insbesondere in Abhängigkeit vom aktuellen Betriebspunkt der Brennkraftmaschine, so daß beim ausschließlichen Verwenden nur eines Verfahrens nicht in allen Betriebsbereichen eine zuverlässige Verbrennungsaussetzererkennung gewährleistet ist.

In der DE-OS 40 35 957 ist beschrieben, wie daher ein Verfahren zur Auswertung der Laufunruhe mit einem Verfahren zur Zündungsüberwachung kombiniert wird.

In der WO 92/11522 ist eine Diagnoseeinrichtung zur Erkennung von Verbrennungsaussetzern beschrieben, bei der aus verschiedenen Verfahren zur Erkennung von Verbrennungsaussetzern entsprechend dem Betriebsbereich der Brennkraftmaschine ein oder mehrere Verfahren ausgewählt werden, die in diesem Bereich geeignet sind, einen Aussetzer zu erkennen.

Die Aufgabe der vorliegenden Erfindung ist es, ein Verfahren anzugeben, das es ermöglicht für alle Betriebzustände des Fahrzeugs und der Brennkraftmaschine mit einer noch höheren Sicherheit anzugeben, ob ein Verbrennungsaussetzer stattgefunden hat oder nicht.

Die Aufgabe wird erfindungsgemäß gelöst durch eine gewichtete Kombination mehrerer Teilverfahren zur Verbrennungsaussetzererkennung, wie dies im Anspruch 1 beschrieben ist.

Die bekannten Verfahren zur Verbrennungsaussetzererkennung können unter anderem eingeteilt werden in:
a) Verfahren, die es gestatten global festzustellen, ob ein Verbrennungsaussetzer aufgetreten ist (zylinderunabhängige Verfahren) und
b) Verfahren, die es zusätzlich gestatten anzugeben, in welchem Zylinder der Verbrennungsaussetzer stattgefunden hat (zylinderindividuelle Verfahren).

Beim erfindungsgemäßen Verfahren werden in seiner allgemeinsten Form gleichzeitig mehrere Teilverfahren zur zylinderindividuellen oder zylinderunabhängigen Erkennung von Verbrennungsaussetzern durchgeführt.

Zeigen nun eines oder mehrere dieser Teilverfahren einen Verbrennungsaussetzer an, werden diesen Teilverfahren sogenannte "Wichtungswerte" zugeordnet, indem, abhängig von den aktuellen Betriebsparametern der Brennkraftmaschine und des Fahrzeugs, aus den einzelnen Teilverfahren zugeordneten Wichtungskennfeldern jedem einzelnen Teilverfahren ein Zahlenwert zugeordnet wird, der ein Maß für die Zuverlässigkeit dieses Teilverfahrens darstellt. Diese Zahlenwerte sind durch statistische Untersuchungen zuvor am Prüfstand für das entsprechende Fahrzeug bei unterschiedlichen Betriebszuständen ermittelt und abgespeichert worden.

Die Wichtungswerte der einzelnen Teilverfahren werden aufsummiert zu einem Referenzwert und dieser mit vorgebbaren Grenzwerten verglichen. Diese Grenzwerte wurden ebenfalls durch statistische Untersuchungen am Fahrzeugprüfstand gewonnen.

Ist der Referenzwert größer als der Grenzwert, so kann mit sehr großer Wahrscheinlichkeit gesagt werden, daß ein Verbrennungsaussetzer tatsächlich stattgefunden hat. Die Verbrennungsaussetzermeldung wird bestätigt.

Ist der Referenzwert kleiner als der Grenzwert, so ist die Wahrscheinlichkeit gering, daß wirklich ein Verbrennungsaussetzer stattgefunden hat. Es ist hier eher anzunehmen, daß es sich um eine Fehlerkennung handelt. Die Verbrennungsaussetzermeldung wird nicht bestätigt.

Eine weitere Möglichkeit besteht darin, die Teilverfahren in Teilgruppen zusammenzuschließen und das Verfahren mehrstufig zu machen, beispielsweise zweistufig.

Es werden beispielsweise in der ersten Verfahrensstufe parallel mehrere zylinderindividuelle Teilverfahren zur Verbrennungsaussetzererkennung, beispielsweise die Auswertung der Laufunruhe der Kurbelwelle, die Überwachung des Zündstroms primärseitig oder sekundärseitig oder die Kontrolle der Betätigung der Einspritzventile als erste Teilgruppe durchgeführt.

Zeigen nun eines oder mehrere dieser Teilverfahren dieser Teilgruppe einen Verbrennungsaussetzer an, werden diesen Teilverfahren wiederum "Wichtungswerte" zugeordnet, indem abhängig vom aktuellen Betriebszustand der Brennkraftmaschine und des Fahrzeugs aus Wichtungskennfeldern jedem einzelnen Teilverfahren ein Zahlenwert zugeordnet wird, der ein Maß für die Zuverlässigkeit dieses Teilverfahrens darstellt.

Die Wichtungswerte der einzelnen Verfahren werden aufsummiert zu einem Referenzwert und dieser mit vorgebbaren Grenzwerten verglichen.
Der erhaltene Referenzwert wird nun nicht nur mit einem Grenzwert verglichen sondern mit zwei Grenzwerten, einem Grenzwert und einem darunter liegenden Bereichswert.

Ist der Referenzwert größer als der Grenzwert, so kann mit sehr großer Wahrscheinlichkeit gesagt werden, daß ein Verbrennungsaussetzer vorliegt. Die Verbrennungsaussetzermeldung wird bestätigt.

Ist der Referenzwert kleiner als der Bereichswert, so ist die Wahrscheinlichkeit gering, daß wirklich ein Verbrennungsaussetzer vorliegt. Es ist hier eher anzunehmen, daß es sich um eine Fehlerkennung handelt. Die Verbrennungsaussetzermeldung wird nicht bestätigt.

Liegt der Referenzwert zwischen Grenzwert und Bereichswert, kann nicht eindeutig gesagt werden, ob wirklich ein Verbrennungsaussetzer aufgetreten ist, oder ob es sich um eine Fehlerkennung handelt. In diesem Bereich wird daher zusätzlich eine Plausibilitätsprüfung mit einer zweiten Teilgruppe bestehend aus beispielsweise zylinderunabhängigen Teilverfahren zur Verbrennungsaussetzererkennung, beispielsweise durch Beobachtung der Abgastemperatur, der Vibrationen der Brennkraftmaschine oder des Sauerstoffanteils im Abgas anhand der Lambdasonde durchgeführt.
Erst wenn auch die Teilverfahren dieser Teilgruppe auf einen Verbrennungsaussetzer schließen lassen, wird die Verbrennungsaussetzermeldung bestätigt.

Die Zuverlässigkeit dieser zylinderunabhängigen Teilverfahren wird ebenfalls über Wichtungskennfelder in Abhängigkeit von den Betriebsparametern ermittelt.

Es ist natürlich auch die umgekehrte Verfahrensfolge möglich, d.h. im ersten Schritt wird mit zylinderunabhängigen Teilverfahren kontrolliert, ob ein Verbrennungsaussetzer stattgefunden hat. Ist hier keine eindeutige Aussage möglich, findet in der zweiten Verfahrensstufe zusätzlich eine Überprüfung durch zylinderindividuellen Teilverfahren statt.
Um den Zylinder, bei dem ein Verbrennungsaussetzer stattgefunden hat, zu identifizieren, ist stets ein zylinderindividuelles Teilverfahren mit heranzuziehen.

Ein Ausführungsbeispiel des erfindungsgemäßen Verfahrens wird anhand der Zeichnungsfigur noch näher erläutert. Es handelt sich dabei um die Verfahrensvariante, bei der zuerst mittels einer ersten Teilgruppe zylinderindividueller Teilverfahren kontrolliert wird, ob ein Verbrennungsaussetzer stattgefunden hat. Wenn hier keine eindeutige Aussage möglich ist, wird in einer zweiten Verfahrensstufe das Ergebnis mit einer zweiten Teilgruppe durch zylinderunabhängige Teilverfahren überprüft.

Die Zeichnungsfigur zeigt schematisch den Verfahrensablauf, wobei beispielhaft als zylinderindividuelle Teilverfahren zur Erkennung von Verbrennungsaussetzern folgende Verfahren gewählt sind:
- Auswertung der Laufunruhe der Kurbelwelle (LU)
- Überwachung des Zündstroms zu den einzelnen Zylindern (ZSR)
und als zylinderunabhängige Teilverfahren zur Erkennung von Verbrennungsaussetzern folgende Verfahren gewählt sind:
- Überwachung der Vibrationen der Brennkraftmaschine (VI)
- Überwachung der Abgaszusammensetzung (Lambdasondensignal LA).

Im Verfahrensschritt S1 werden die erste Teilgruppe von Verfahren, die zylinderindividuellen Teilverfahren "Überwachung der Laufunruhe (LU)" und "Überwachung des Zündstroms zu den einzelnen Zylindern (ZSR)" parallel durchgeführt.

Wenn keines der Teilverfahren einen Verbrennungsaussetzer anzeigt, wird im Verfahrensschritt S2 über eine Meldung an die Statistik (Verfahrensschritt S3) wieder zum Verfahrensanfang A zurückgegangen.

Wenn aber mindestens eines der Teilverfahren dieser Teilgruppe einen Verbrennungsaussetzer anzeigt, wird im Verfahrensschritt S2 zum Verfahrensschritt S4 verzweigt, wo für das Teilverfahren der Zündstromüberwachung ZSR in Abhängigkeit vom aktuellen Betriebspunkt des Fahrzeugs aus einem oder mehreren Wichtungskennfeldern für dieses Verfahren ein Wichtungswert IWWZ gewonnen wird, der ein Maß ist für die Zuverlässigkeit, mit der dieses Verfahren im aktuellen Betriebspunkt des Fahrzeugs einen Verbrennungsaussetzer richtig erkennen kann.
Bei den einzelnen Teilverfahren ist diese Zuverlässigkeit von unterschiedlichen Betriebsparametern abhängig, beim hier angeführten Beispiel der Zündstromüberwachung beispielsweise von der Drehzahl n, der Last (gemessen über die Luftmasse LM) und der Kühlwassertemperatur TKW.

Im Verfahrensschritt S5 wird anschließend für das Teilverfahren der Laufunruhe LU wiederum in Abhängigkeit vom aktuellen Betriebspunkt des Fahrzeugs aus einem oder mehreren Wichtungskennfeldern für dieses Verfahren ein Wichtungswert IWWL gewonnen, der ein Maß ist für die Zuverlässigkeit, mit der dieses Verfahren im aktuellen Betriebspunkt des Fahrzeugs einen Verbrennungsaussetzer richtig erkennen kann. Beim hier betrachteten Teilverfahren der Überwachung der Laufunruhe LU ist diese Zuverlässigkeit abhängig von den Betriebsparametern: Drehzahl n, Last (gemessen über die Luftmasse LM) und Zustand der Wegstrecke (Weg).

Beim Ermitteln der einzelnen Betriebsparameter kann ebenfalls die parallele Ausführung verschiedener Verfahren erforderlich sein. Beispielsweise wird der Zustand der Wegstrecke, also insbesondere das Vorliegen einer Schlechtwegstrecke, im hier beschriebenen Ausführungsbeispiel durch Erfassen der Radbeschleunigungen und durch Auswerten der Schwankungen des Tankdrucks ermittelt.
Auch diese Verfahren arbeiten je nach Betriebszustand des Fahrzeuges mit unterschiedlichen Zuverlässigkeiten, so daß auch hier eine Wichtung nach oben beschriebenem Verfahren vorgesehen werden kann.

Hat eines der Teilverfahren keinen Verbrennungsaussetzer erkannt, so wird im entsprechenden Verfahrensschritt S4 beziehungsweise S5 der jeweilige Wichtungswert zu Null gesetzt.

Prinzipiell kann dieses Verfahren der Gewinnung von Zuverlässigkeitswerten bei allen Verfahren angewandt werden, die abhängig vom Betriebspunkt des Fahrzeuges sind, sofern sich die Abhängigkeit der Zuverlässigkeit der einzelnen Verfahren in statistischer Weise im Voraus, beispielsweise am Prüfstand, ermitteln läßt und auf diese ermittelte Werte dann in gespeicherter Form zugegriffen werden kann.

Der Wichtungswert IWWZ des Teilverfahrens zur überwachung des Zündstroms ZSR und der Wichtungswert IWWL des Teilverfahrens zur Überwachung der Laufunruhe LU, werden im Verfahrensschritt S6 zu einem Referenzwert RW aufsummiert.

Im Verfahrensschritt S7 erfolgt nun ein Vergleich des Referenzwerts RW mit einem Grenzwert GW, der hier im Ausführungsbeispiel zu 1 gewählt ist.

Ist der Referenzwert RW größer oder gleich dem GW (≥1), wird die Verbrennungsaussetzermeldung bestätigt, dies im Verfahrensschritt S8 einem statistischen Auswerteprogramm gemeldet und wieder zum Verfahrensanfang A zurückgegangen.

Das statistische Auswerteprogramm summiert für die einzelnen Zylinder die Verbrennungsaussetzer auf. Überschreiten diese im Vergleich mit den ordnungsgemäßen Verbrennungen dieses Zylinders einen vorgebbaren Grenzwert, werden steuernde Maßnahmen ergriffen, wie beispielsweise die Abschaltung der Kraftstoffeinspritzung für diesen Zylinder.

Ist der Referenzwert RW < 1 wird er im Verfahrensschritt S9 mit einem darunter liegenden Bereichswert BW, der hier im Ausführungsbeispiel zu 0,5 gewählt ist, verglichen. Ist er kleiner als dieser Bereichswert BW, so wird die Verbrennungsaussetzermeldung nicht bestätigt, dies im Verfahrensschritt S10 der statistischen Auswertung gemeldet und zum Verfahrensanfang A zurückgegangen.

Ist der Referenzwert RW > 0,5, liegt er also zwischen Bereichswert und Grenzwert (0,5 ≦ RW < 1), kann also keine zuverlässige Aussage darüber erfolgen, ob eine Verbrennungsaussetzer stattgefunden hat oder nicht, so erfolgt anschließend eine Überprüfung durch eine zweite Teilgruppe zylinderunabhängiger Teilverfahren.

Im Ausführungsbeispiel findet dabei ein Teilverfahren Verwendung, mit dem die Vibrationen der Brennkraftmaschine überwacht werden (VI) und ein Teilverfahren, das die Abgaszusammensetzung überwacht (LA) beispielsweise anhand des Signals der Lambdasonde (Verfahrensschritt S11). Zeigt keines dieser Verfahren einen Aussetzer an, wird im Verfahrensschritt S12 die Verbrennungsaussetzermeldung nicht bestätigt, dies der statistischen Auswertung (Verfahrensschritt S13) gemeldet und wieder zum Verfahrensanfang A zurückgegangen.

Zeigt jedoch mindestens eines der Teilverfahren einen Aussetzer an, wird vom Verfahrensschritt S12 zum Verfahrensschritt S14 verzweigt und hier sowie im darauffolgenden Verfahrensschritt S15, wie schon weiter oben bei den zylinderindividuellen Teilverfahren beschrieben, in Abhängigkeit vom aktuellen Betriebspunkt des Fahrzeugs aus einem oder mehreren Wichtungskennfeldern für das jeweilige Teilverfahren ein Wichtungswert (UWWV beziehungsweise UWWL) ermittelt, der ein Maß ist für die Zuverlässigkeit, mit der dieses Teilverfahren im aktuellen Betriebspunkt des Fahrzeugs einen Verbrennungsaussetzer richtig erkennen kann. Bei den einzelnen Teilverfahren ist diese Zuverlässigkeit wiederum von unterschiedlichen Betriebsparametern abhängig, beim hier angeführten Beispiel der Vibrationsüberwachung VI beispielsweise von der Drehzahl n, der Fahrzeuggeschwindigkeit v und dem Zustand der Wegstrecke (Weg), beim Verfahren der überwachung der Gemischzusammensetzung LA von der Kühlwassertemperatur TKW.

Die gewonnenen Wichtungswerte UWWV und UWWL werden im Verfahrensschritt S16 aufsummiert zu einem zweiten Referenzwert RW2.

Im Verfahrensschritt S17 wird, wenn dieser zweite Referenzwert RW2 größer als ein vorgebbarer zweiter Grenzwert GW2 ist, die Verbrennungsaussetzermeldung bestätigt, dies der statistischen Auswertung gemeldet (Verfahrensschritt S18) und zum Verfahrensanfang A zurückgegangen.

Wenn der zweite Referenzwert RW2 kleiner als der zweite Grenzwert GW2 ist, wird die Verbrennungsaussetzermeldung nicht bestätigt, dies der statistischen Auswertung gemeldet (Verfahrensschritt S19) und zum Verfahrensanfang A zurückgegangen.

Lassen also die zylinderunabhängigen Teilverfahren nicht mit genügender Zuverlässigkeit ebenfalls einen Aussetzer erkennen, so hat mit hoher Wahrscheinlichkeit bei den zylinderindividuellen Teilverfahren eine Fehlerkennung stattgefunden. Die Verbrennungsaussetzermeldung wird nicht bestätigt.

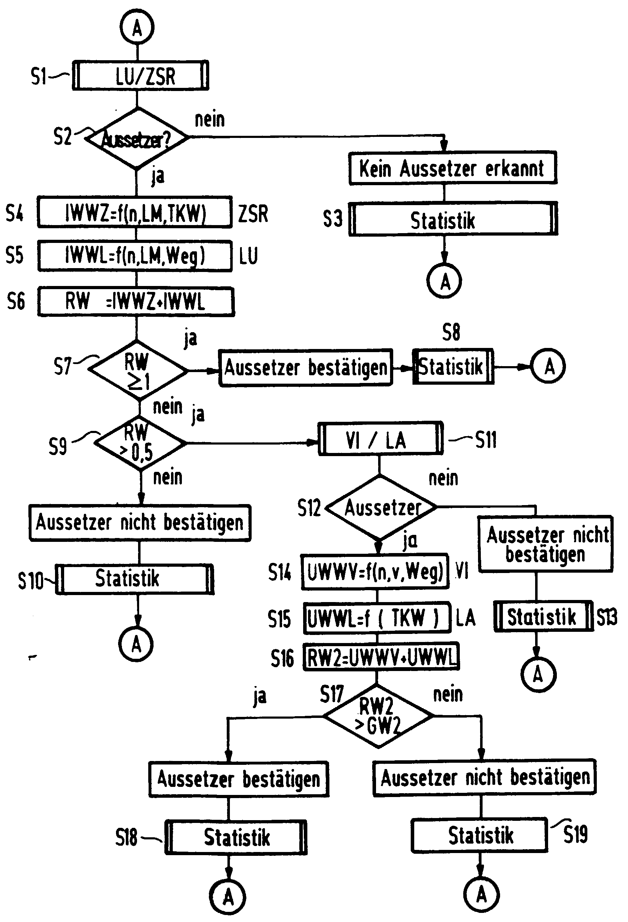

## Patentansprüche

1. Verfahren zur Überprüfung der Meldung von Verbrennungsaussetzern einer Brennkraftmaschine durch mindestens zwei unterschiedliche Teilverfahren (LU, ZSR; VI, LA) zur Verbrennungsaussetzererkennung einer ersten Teilgruppe,
**dadurch gekennzeichnet**,
- daß die Teilverfahren (LU, ZSR; VI, LA) unabhängig vom aktuellen Lastzustand der Brennkraftmaschine gleichzeitig ausgeführt werden,
- daß jedem Teilverfahren (LU, ZSR; VI, LA) ein Wichtungskennfeld zugeordnet ist, das Wichtungswerte (IWWL, IWWZ; UWWV, UWWL) abhängig vom aktuellen Lastzustand enthält und diese Wichtungswerte (IWWL, IWWZ; UWWV, UWWL) ein Maß für die Zuverlässigkeit der Meldung dieses Teilverfahrens (LU, ZSR; VI, LA) darstellen,
- daß bei jeder Verbrennungsaussetzermeldung eines Teilverfahrens (LU, ZSR; VI, LA) ein Wichtungswert (IWWL, IWWZ; UWWV, UWWL) aus dem zugeordneten Wichtungskennfeld ausgelesen wird,
- daß die Wichtungswerte (IWWL, IWWZ; UWWV, UWWL) der Teilverfahren (LU, ZSR; VI, LA) zu einem Referenzwert (RW) summiert werden und
- daß der Referenzwert (RW) mit einem Grenzwert verglichen wird und die Verbrennungsaussetzermeldung bestätigt wird, wenn der Referenzwert (RW) größer als der Grenzwert ist.

2. Verfahren nach Anspruch 1,
**dadurch gekennzeichnet,**
- daß eine zweite Teilgruppe mit mindestens einem weiteren Teilverfahren (LU, ZSR, VI, LA) und einem zweiten Grenzwert (GW2) einen weiteren Referenzwert (RW2) liefert und daß die Verbrennungsaussetzermeldung bestätigt wird, wenn
- der Referenzwert (RW) der ersten Teilgruppe zwischem ihrem Grenzwert (GW) und einem darunter liegenden Bereichswert (BW) und
- der zweite Referenzwert (RW2) über dem zweiten Grenzwert (GW2) liegt.

3. Verfahren nach Anspruch 2,
**dadurch gekennzeichnet,**
daß die Teilverfahren (LU, ZSR, VI, LA) der ersten Teilgruppe zylinderindividuell, die der zweiten Teilgruppe zylinderunabhängig arbeiten.

4. Verfahren nach Anspruch 2,
**dadurch gekennzeichnet,**
daß die Teilverfahren (LU, ZSR, VI, LA) der ersten Teilgruppe zylinderunabhängig, die der zweiten Teilgruppe zylinderindividuell arbeiten.

5. Verfahren nach einem der vorhergehenden Ansprüche,
**dadurch gekennzeichnet,**
daß folgende Teilverfahren (LU, ZSR, VI, LA) zur zylinderindividuellen Erkennung von Verbrennungsaussetzern Verwendung finden:
- Auswertung der Laufunruhe der Kurbelwelle
- Überwachung des Zündstroms zu den einzelnen Zylindern
- Überwachung des Brennraumdrucks der einzelnen Zylinder
- Verbrennungsüberwachung mittels Lichtaufnahme
- Ionenstrommessung an der Zündkerze
- Überwachung der Einspritzventile.

6. Verfahren nach einem der vorherigen Ansprüche
**dadurch gekennzeichnet,** daß
folgende Teilverfahren zur zylinderunabhängigen Erkennung von Verbrennungsaussetzern Verwendung finden:
- Überwachung der Abgastemperatur
- Überwachung der Abgaszusammensetzung
- Überwachung der Vibrationen der Brennkraftmaschine
- Überwachung der Geräuschentwicklung der Brennkraftmaschine

7. Verfahren nach einem der vorherigen Ansprüche
**dadurch gekennzeichnet,** daß
die bestätigten Verbrennungsaussetzer einer statistischen Auswertung zugeführt werden, und bei Überschreiten eines vorgebbaren Grenzwertes steuernde Maßnahmen ergriffen werden und eine Anzeige erfolgt.

## Claims

1. Method for checking the signalling of misfires of an internal-combustion engine by at least two different sub-methods (LU, ZSR; VI, LA) for misfire recognition of a first subgroup,
characterized in that
- the sub-methods (LU, ZSR; VI, LA) are executed simultaneously, irrespective of the current load state of the internal-combustion engine,
- each sub-method (LU, ZSR; VI, LA) is assigned a weighting characteristic map which contains weighting values (IWWL, IWWZ; UWWV, UWWL) as a function of the current load state, and these weighting values (IWWL, IWWZ; UWWV, UWWL) are a measure of the reliability of the signalling of this sub-method (LU, ZSR; VI, LA),
- during each misfire signalling of a sub-method (LU, ZSR; VI, LA) a weighting value (IWWL, IWWZ; UWWV, UWWL) is read out from the associated weighting characteristic map,
- the weighting values (IWWL, IWWZ; UWWV, UWWL) of the sub-methods (LU, ZSR; VI, LA) are summed to form a reference value (RW), and
- the reference value (RW) is compared with a limit value and the misfire signalling is confirmed when the reference value (RW) is higher than the limit value.

2. Method according to Claim 1,
characterized in that
- a second subgroup with at least one further sub-method (LU, ZSR; VI, LA) and with a second limit value (GW2) supplies a further reference value (RW2), and in that the misfire signalling is confirmed when
- the reference value (RW) of the first subgroup is between the limit value (GW) of the latter and a range value (BW) lying below this, and
- the second reference value (RW2) is above the second limit value (GW2).

3. Method according to Claim 2, characterized in that the sub-methods (LU, ZSR, VI, LA) of the first subgroup work according to the individual cylinders and those of the second subgroup work independently of the cylinders.

4. Method according to Claim 2, characterized in that the sub-methods (LU, ZSR, VI, LA) of the first subgroup work independently of the cylinders and those of the second subgroup work according to the individual cylinders.

5. Method according to one of the preceding claims, characterized in that the following sub-methods (LU, ZSR, VI, LA) are used for recognizing misfires according to the individual cylinders:
- Evaluation of the uneven running of the crankshaft
- Monitoring of the ignition current to the individual cylinders
- Monitoring of the combustion-space pressure of the individual cylinders
- Combustion monitoring by light absorption
- Ionic current measurement at the spark plug
- Monitoring of the injection valves.

6. Method according to one of the preceding claims, characterized in that the following sub-methods are used for recognizing misfires independently of the cylinders:
- Monitoring of the exhaust-gas temperature
- Monitoring of the exhaust-gas composition
- Monitoring of the vibrations of the internal-combustion engine
- Monitoring of the noise generation of the internal-combustion engine.

7. Method according to one of the preceding claims, characterized in that the confirmed misfires are supplied for statistic evaluation and, if a predeterminable limit value is exceeded, controlling measures are taken and an indication is given.

## Revendications

1. Procédé pour contrôler la signalisation de ratés d'allumage d'un moteur à combustion interne à l'aide d'au moins deux procédés partiels différents (LU, ZSR, VI, LA) pour l'identification de ratés d'allumage d'un premier groupe partiel, caractérisé en ce
- que les procédés partiels (LU, ZSR, VI, LA) sont exécutés simultanément indépendamment de l'état actuel de charge du moteur à combustion interne,
- qu'à chaque procédé partiel (LU, ZSR; VI, LA) est associé un champ de caractéristiques de pondération, qui contient des valeurs de pondération (IWWL, IWWZ; UWWV, UWWL) en fonction de l'état actuel de la charge et que ces valeurs de pondération (IWWL, IWWZ; UWWV, UWWL) représentent une mesure de la fiabilité de la signalisation fournie par ce procédé partiel (LU, ZSR; VI, LA),
- que lors de chaque signalisation d'un raté d'allumage par un procédé partiel (LU, ZSR; VI, LA) une valeur de pondération (IWWL, IWWZ; UWWV, UWWL) est lue dans le champ associé de caractéristiques de pondération,
- que les valeurs de pondération (IWWL, IWWZ; UWWV, UWWL) des procédés partiels (LU, ZSR; VI, LA) sont additionnées pour former une valeur de référence (RW); et
- que la valeur de référence (RW) est comparée à une valeur limite et que la signalisation de ratés d'allumage est confirmée lorsque la valeur de référence (RW) est supérieure à la valeur limite.

2. Procédé selon la revendication 1, caractérisé en ce
- qu'un second groupe partiel incluant au moins un autre procédé partiel (LU, ZSR, VI, LA) et une seconde valeur limite (GW2) fournit une seconde valeur de référence (RW2) et que la signalisation de ratés d'allumage est confirmée lorsque
- la valeur de référence (RW) du premier groupe partiel est située entre sa valeur limite (GW) et une valeur inférieure de gamme (BW) à cette valeur limite, et
- la seconde valeur de référence (RW2) est supérieure à la seconde valeur limite (GW2).

3. Procédé selon la revendication 2, caractérisé en ce que les procédés partiels (LU, ZSR, VI, LA) du premier groupe partiel travaillent individuellement pour chaque cylindre tandis que les procédés partiels du second groupe partiel travaillent indépendamment des cylindres.

4. Procédé selon la revendication 2, caractérisé en ce que les procédés partiels (LU, ZSR, VI, LA) du premier groupe partiel travaillent indépendamment des cylindres et que les procédés partiels du second groupe partiel travaillent individuellement pour chaque cylindre.

5. Procédé selon l'une des revendications précédentes, caractérisé en ce qu'on utilise les procédés partiels suivants (LU, ZSR, VI, LA) pour l'identification, pour chaque cylindre, de ratés d'allumage:
- évaluation de l'instabilité de marche du vilebrequin,
- contrôle du courant d'allumage envoyé aux différents cylindres,
- contrôle de la pression dans la chambre de combustion des différents cylindres,
- contrôle de la combustion au moyen de l'absorption de lumière,
- mesure du courant ionique au niveau des bougies d'allumage,
- contrôle des soupapes d'injection.

6. Procédé selon l'une des revendications précédentes, caractérisé en ce qu'on utilise les procédés partiels suivants pour l'identification, indépendante des cylindres, de ratés d'allumage :
- contrôle de la température des gaz d'échappement,
- contrôle de la composition des gaz d'échappement,
- contrôle des vibrations du moteur à combustion interne,
- contrôle du bruit produit par le moteur à combustion interne.

7. Procédé selon l'une des revendications précédentes, caractérisé en ce que les ratés d'allumage confirmés sont soumis à une exploitation statistique et que dans le cas du dépassement d'une valeur limite pouvant être prédéterminée, des dispositions de commande sont prises et un affichage est réalisé.
